# EUROPÄISCHE PATENTANMELDUNG

(11) **EP 3 457 164 A1**
(43) Veröffentlichungstag der Anmeldung: **20.03.2019**
(21) Anmeldenummer: 18194898.5
(22) Anmeldetag: 17.09.2018
(51) Int. Cl.: G01S 5/02

(54) **VERFAHREN ZUR ORTUNG EINES TAGS, INSBESONDERE EINES OBJEKTS, UND/ODER EINER PERSON INNERHALB EINES DREIDIMENSIONALEN RAUMBEREICHS UND ORTUNGSSYSTEM**

(30) Priorität: 18.09.2017 DE 102017121582
(71) Anmelder: Hochschule Osnabrück, 49076 Osnabrück (DE)
(72) Erfinder: Belchhaus, Chris, 49090 Osnabrück (DE); Schaarschmidt, Marco, 49076 Osnabrück (DE); Westerkamp, Clemens, 49080 Osnabrück (DE)
(74) Vertreter: Träger, Denis

(57) **Zusammenfassung**

Die Erfindung betrifft ein Verfahren zur Ortung eines beweglichen Tags (T, RT) beziehungsweise Objekts innerhalb eines dreidimensionalen Raumbereichs (11). Dabei wird der Tag (T) mit dem Objekt, insbesondere einem Fahrzeug oder Fluggerät, verbunden wird, wobei der Tag (T) wenigstens ein Funkmodul im Ultra-Wide-Band, wie ein UWB-Funkmodul (17) aufweist, und wobei außerdem wenigstens zwei weitere UWB-Funkmodule (17) als Anker zur Definition fester Positionen im Raum positioniert werden. Das Verfahren zeichnet sich dadurch aus, dass eine Ortung des wenigstens einen Tags beziehungsweise des damit verbundenen Objekts mittels des im UWB-Netzwerk aus UWB-Funkmodulen (17) ermöglicht wird, wobei Datenpakete zur Positionsermittlung des Tags (T, RT) beziehungsweise Objekts innerhalb des UWB-Netzwerks zwischen den UWB-Funkmodulen (17) weitergeleitet werden. Des Weiteren wird noch ein entsprechendes Ortungssystem (10) beschrieben.

## Beschreibung

Die Erfindung betrifft ein Verfahren zur Ortung eines Tags, insbesondere eines Objekts und/oder einer Person innerhalb eines dreidimensionalen Raumbereichs gemäß dem Oberbegriff des Anspruchs 1. Des Weiteren betrifft die Erfindung ein Ortungssystem gemäß dem Oberbegriff des Anspruchs 10.

Ortungssysteme basierend auf dem Global Positioning System (GPS) sind weit verbreitet. Es handelt sich dabei um auf geostationären Satelliten basierendes System, bei dem durch Multilateration mehrerer Satelliten durch einen Empfänger eine Position ermittelt werden kann. Die Genauigkeit bei den üblichen für zivile Zwecke vorgesehenen liegt bei etwa zehn Metern. Durch zusätzliche Berücksichtigung beispielsweise von Mobilfunknetzen lässt sich die Genauigkeit noch auf etwa einen Meter verbessern.

Um jedoch GPS-Signale empfangen zu können, ist bei den entsprechend verwendeten Frequenzbändern üblicherweise freie Sicht auf mehrere Satelliten erforderlich. Mit anderen Worten funktionieren Satellitenortungssysteme wie GPS üblicherweise sinnvoll nur im Freien, also außerhalb von Gebäuden, Räumen und fern von anderen Abschattungen, wie Wänden, Klippen, Wäldern und anderen für die relevanten elektromagnetischen Strahlen nicht transparenten Materialien.

Für den Einsatz in Gebäuden und anderen sind daher alternative Systeme entwickelt worden. Beispielsweise sind mit Lichtsignalen arbeitende Ortungssysteme für Gebäude bekannt, bei denen mehrere spezielle Lichtsignalsender aufgestellt und eingemessen werden müssen, um eine Ortung zu ermöglichen. Nachteilig ist dabei vor allem, dass bei schlechter Sicht, beispielsweise bei Nebel oder Bränden, Lichtsignale unterbrochen werden, so dass keine Ortung mehr möglich ist. So sind derartige Systeme nicht dazu geeignet, beispielsweise bei spontanen Einsätzen von Rettungskräften ohne vorhandene Infrastruktur, wie beispielsweise Feuerwehreinsätzen, oder auch in feuchten Umgebungen, wie beispielsweise in Gewächshäusern mit Beregnungsanlagen, eingesetzt zu werden.

Auch gibt es funkbasierte Systeme, die mit speziellen Funksendern, sogenannten Ankern, arbeiten. An den zu ortenden Objekten werden entsprechende, als Tags bezeichnete Empfänger angebracht. Es müssen aber zumindest drei Anker in einem mit einem Ortungssystem zu versehenden Raumbereich aufgestellt und eingemessen werden, bevor überhaupt eine Ortung durch Trilateration durch den Tag möglich ist. Für größere Genauigkeiten und eine sichere Abdeckung des gesamten Raumbereichs auch bei partieller Abschattung einzelner Anker am Standort des jeweiligen Tags werden üblicherweise auch noch mehr als drei Anker aufgestellt, so dass eine Multilateration ermöglicht wird.

Ultra-Wide-Band (UWB) als Funkstandard bietet zwar ein besonders breites Frequenzspektrum, da dieses außerdem fernab üblicher Frequenzbänder liegt. So könnte es sich grundsätzlich für einen störungsfreien Datenaustausch in einem Ortungssystem eignen. Allerdings ist in bekannten UWB-Systemen keine Kommunikation zwischen einzelnen Teilnehmern vorgesehen, sondern lediglich zwischen einer Basisstation und eventuellen Teilnehmern.

Dies führt in jedem Fall zu erheblichem Aufwand bei der Etablierung derartiger Ortungssysteme in neuen Umgebungen.

Es ist daher eine Aufgabe der Erfindung, die genannten Nachteile zu beseitigen. Insbesondere soll der Aufwand zur Bereitstellung eines derartigen Ortungssystems verringert werden. Dies ist insbesondere bei zeitkritischen Einsätze der Feuerwehr, aber auch in anderen Fällen erstrebenswert.

Die Aufgabe wird gelöst durch ein Verfahren zur Ortung eines insbesondere beweglichen Tags, insbesondere eines Objekts und/oder einer Person, innerhalb eines dreidimensionalen Raumbereichs mit den Maßnahmen des Anspruchs 1. Es wird dazu der Tag mit einem Objekt, insbesondere einem Fahrzeug, einem Fluggerät oder auch einer Person, verbunden. Die Verbindung kann dauerhaft oder lösbar ausgebildet sein. Der Tag weist wenigstens ein Funkmodul im Ultra-Wide-Band (UWB-Funkmodul) auf. Außerdem werden wenigstens zwei weitere UWB-Funkmodule als Anker zur Definition fester Positionen im Raum positioniert. Das Verfahren zeichnet sich dadurch aus, dass eine Ortung des wenigstens einen Tags beziehungsweise des damit verbundenen Objekts und/oder der Person mittels des im UWB-Netzwerk aus UWB-Funkmodulen ermöglicht wird. Dabei werden Datenpakete zur Positionsermittlung des Objekts innerhalb des UWB-Netzwerks zwischen den UWB-Funkmodulen weitergeleitet. Hierdurch wird erreicht, dass die Ortung mittels des UWB-Netzwerks abgewickelt wird. Es ist insbesondere nicht erforderlich, auf externe Quellen zuzugreifen. Dennoch wird eine verbesserte Genauigkeit gegenüber bekannten Verfahren erreicht.

Vorzugsweise werden zwei Anker vorgesehen. Weiter vorzugsweise werden außerdem wenigstens ein Tag, bevorzugt mehrere Tags verwendet. Erfindungsgemäß genügen bereits zwei der Anker, um eine Lokalisierung zu ermöglichen. Dies wird dadurch erreicht, dass die Tags des Systems in die Lokalisierung einbezogen werden. Insbesondere kann dies durch Kombination mit Höhenmessungen und/oder mit Informationen über gültige Raumbereiche verbessert werden. So kann insbesondere eine Multilateration über eine Vielzahl von UWB-Funkmodulen im Raumbereich vorgenommen werden, die insbesondere in Form der Tags und Anker vorhanden sind. Durch Verwendung mehrerer oder sogar einer Vielzahl von Tags kann die Genauigkeit im System erheblich erhöht werden. Diese Tags lassen sich selber orten, tragen aber bevorzugt zur Verbesserung der Ortungsmessungen bei. Hierzu dienen sie selber als Knoten beziehungsweise UWB-Funkmodule im UWB-Netzwerk. Indem deren Position wiederum bekannt ist, lassen sie sich selber zur relativen Positionsermittlung anderer UWB-Funkmodule nutzen.

Die Datenübertragung wird vorzugsweise ausschließlich über das UWB-Netzwerk vorgenommen. Die Daten werden insbesondere zwischen den UWB-Funkmodulen vom Sender zum Empfänger weitergeleitet. Gegebenenfalls kann dies über ein oder mehrere UWB-Funkmodule als Zwischenstation erfolgen. Eine Weiterleitung von Daten über mehrere Stationen oder Knoten ist in klassischen, am Markt verfügbaren UWB-Netzwerken weder bekannt noch vorgesehen. Dies erfolgt üblicherweise über alternative Datenverbindungen, wie beispielsweise über Funknetze, wie Wireless Local Area Network (WLAN) oder auch Bluetooth. So entfällt der sonst übliche zusätzliche Aufwand für diese weiteren Netzwerke hier erfindungsgemäß.

Insbesondere wird ein Routing Mesh-Algorithmus zum Datenaustausch und zur Datenweiterleitung zwischen den UWB-Funkmodulen im UWB-Netzwerk implementiert. Vorzugsweise werden die Pfade zum Datenaustausch und zur Datenweiterleitung innerhalb des UWB-Netzwerks kontinuierlich optimiert. Die Daten können vorzugsweise zwischen allen beteiligten UWB-Funkmodulen, also vorzugsweise mittels beziehungsweise zwischen allen Ankern und Tags, ausgetauscht und/oder jeweils weitergeleitet werden. Es ist insbesondere nicht erforderlich, dass jeweils Daten von einem Tag als Absender erst zu einem Anker übermittelt werden, bevor sie weitergeleitet werden zum nächsten Tag als Adressat. Vielmehr können die Daten direkt von einem Tag als Absender zum Tag als Adressaten übertragen werden, gegebenenfalls über einen oder mehrere dazwischenliegende Tags. So kann insbesondere durch ständige Optimierung des UWB-Netzwerks und der Übertragungswege eine fortlaufende Verbesserung der Ortung und/oder Datenübertragung erreicht werden. Dies kann insbesondere selbstorganisiert innerhalb des UWB-Netzwerks erfolgen, wodurch eine höhere Robustheit des Netzwerks erreicht werden kann. Auf die beschriebene Weise können auch Sensordaten, die nicht zur Lokalisierung beitragen, übermittelt werden. Das System kann also auch als UWB-basiertes, drahtloses Sensornetzwerk eingesetzt werden.

Die Lage und/oder Bewegung des wenigstens einen Tags im Raumbereich werden/wird vorzugsweise durch Messung mittels eines Lage- und Positionssensors ermittelt. Besonders bevorzugt erfolgt dies mittels wenigstens eines 9-Achsen-Sensors. Als 9-Achsen-Sensor ist er typischerweise mit Gyroskop, Beschleunigungssensor und Kompass ausgestattet. Derartige Sensoren sind als standardisierte Sensortypen erhältlich. Sie dienen insbesondere zur Positions- und Lageermittlung.

Die relative Höhe des wenigstens einen Tags wird durch Messung von Luftdruckunterschieden zwischen Tag und Anker ermittelt. Hier sollte üblicherweise eine Berücksichtigung eines der Anker genügen, da der Luftdruck als nach oben hin linear abnehmend angenommen werden kann. Gegebenenfalls kann aber auch noch zusätzlich eine Kalibrierung durch eine Messung von Druckdifferenzen zwischen in unterschiedliche Höhe angeordneten Ankern oder auch Tags erfolgen, gegebenenfalls als fortlaufende Kalibrierung. Wenigstens ein Anker und wenigstens ein Tags weisen dazu vorzugsweise jeweils einen Luftdruckmesser auf. Damit kann eine relative Höhenmessung auf einfache Weise ermöglicht werden. Ergänzend können auch hier Abstandsmessungen durch Tri- oder Multilateration erfolgen.

Weiter bevorzugt wird die Position eines Tags im Raumbereich innerhalb und/oder außerhalb der Reichweite von Ankern (Remote Tag) anhand der Kommunikation mit anderen Tags ermittelt. Dabei werden vorzugsweise Abstandsmessungen und/oder Empfangsqualitätsmessungen und/oder Laufzeitmessungen und/oder Luftdruckmessungen vorgenommen. So kann insbesondere durch Kombination verschiedener Messsysteme eine hohe Genauigkeit erreicht werden.

Es werden insbesondere gespeicherte Daten in Form von Kartenmaterial und/oder Plänen von Gebäuden und/oder Anlagen und/oder vorangegangener Bewegungsmuster zur Verbesserung der Positionsermittlung im Raumbereich verwendet. Die Daten ermöglichen vorzugsweise einer Verbesserung der Positionsbestimmung, weiter vorzugsweise durch Fortsetzen der Datenspeicherung bei der Bewegung im jeweiligen Raumbereich. Es erfolgt insbesondere eine Nutzung vorhandener oder ergänzter Daten, insbesondere Kartendaten, Gebäudedaten, Anlagendaten und/oder Bewegungsdaten. Damit können beispielsweise Plausibilitätsprüfungen zulässiger Wegprofile anhand der gespeicherten Daten durchgeführt werden. Auch können Zuordnungen aktueller Ortungsmessungen zu Positionen im Raumbereich anhand von Kartendaten vorgenommen werden. Schließlich lassen sich vorzugsweise bei der Bewegung weitere Daten ermitteln und/oder speichern. Auch lassen sich somit von extern Hinweise zur Anleitung und Führung von Personen in der Umgebung geben. Damit kann die Datenbasis wie auch die Genauigkeit der Ortung verbessert werden. Insbesondere wenn sich Personen in unbekannten Umgebungen aufhalten, also beispielsweise bei Hilfseinsätzen durch Polizei oder Feuerwehr, ist eine Überwachung der Position der Personen erforderlich, um gegebenenfalls Rettungsmaßnahmen einleiten zu können. Auch kann eine Führung der Personen durch die Umgebung erfolgen, beispielsweise per Funk, wenn die aktuelle Position von extern erfassbar ist.

Weiter bevorzugt wird die ermittelte Position eines Tags im UWB-Netzwerk für andere Teilnehmer abfragbar bereitgehalten. So lassen sich einzelne Positionsdaten abfragen wie auch selber zur Positionsermittlung nutzen. Die Daten werden vorzugsweise nur innerhalb des UWB-Netzwerks übertragen und/oder weitergeleitet.

Die eingangs geschilderte Aufgabe wird außerdem gelöst durch ein Ortungssystem zur Ermittlung der Position wenigstens eines beweglichen Objekts und/oder einer Person innerhalb eines Raumbereichs mit den Merkmalen des Anspruchs 10. Insbesondere handelt es sich bei dem Objekt um wenigstens ein Fahrzeug oder Fluggerät. Als Personen kommen insbesondere Hilfskräfte, wie beispielsweise Polizei oder Feuerwehr, aber auch andere Personen in Betracht, die beispielsweise in gefährlichen oder unbekannten Umgebungen unterwegs sind. Das wenigstens eine Objekt und/oder die wenigstens eine Person weist außerdem wenigstens einen Tag auf, wobei der Tag wenigstens ein Funkmodul ausgestattet ist. Das Funkmodul arbeitet hier typischerweise im Ultra-Wide-Band und wird daher als UWB-Funkmodul bezeichnet. Außerdem sind wenigstens zwei weitere UWB-Funkmodule als sogenannte Anker zur Definition fester Positionen im Raum positioniert. Vorzugsweise ist ein Verfahren zur Positionsermittlung nach den obigen Beschreibungen implementiert. Das Ortungssystem zeichnet sich hier dadurch aus, dass die UWB-Funkmodule zur Übertragung und/oder Weiterleitung der Daten zur Positionsermittlung im UWB-Netzwerk ausgebildet sind.

Besonders bevorzugt sind zwei Anker vorgesehen. Damit kann eine Ortung im erfindungsgemäßen System erfolgen. Vorzugsweise ist außerdem wenigstens eines, aber weiter vorzugsweise sind mehrere Tags im UWB-Netzwerk vorgesehen. Diese Tags lassen sich selber orten, tragen aber bevorzugt zur Verbesserung der Ortungsmessungen bei. Hierzu dienen sie selber als Knoten beziehungsweise UWB-Funkmodule im UWB-Netzwerk. Indem deren Position wiederum bekannt ist, lassen sie sich selber zur relativen Positionsermittlung anderer UWB-Funkmodule nutzen. Erfindungsgemäß genügen bereits zwei der Anker, um eine Lokalisierung zu ermöglichen. Dies wird dadurch erreicht, dass die Tags des Systems in die Lokalisierung einbezogen werden. So kann insbesondere eine Multilateration über eine Vielzahl von UWB-Funkmodulen im Raumbereich vorgenommen werden, die insbesondere in Form der Tags und Anker vorhanden sind.

Weiter bevorzugt ist ein Speicher zum Speichern und/oder Bereitstellen von Daten, insbesondere von Kartenmaterial und/oder vorangegangenen Bewegungsmusters, betreffend den Raumbereich, vorgesehen. Die Daten ermöglichen vorzugsweise einer Verbesserung der Positionsbestimmung, weiter vorzugsweise durch Fortsetzen der Datenspeicherung bei der Bewegung im Raumbereich. Es erfolgt insbesondere eine Nutzung vorhandener oder ergänzter Daten, insbesondere Kartendaten und/oder Bewegungsdaten. Damit können beispielsweise Plausibilitätsprüfungen zulässiger Wegprofile anhand der gespeicherten Daten durchgeführt werden. Auch können Zuordnungen aktueller Ortungsmessungen zu Positionen im Raumbereich anhand von Kartendaten vorgenommen werden. Schließlich lassen sich vorzugsweise bei der Bewegung weitere Daten ermitteln und/oder speichern. Damit kann die Datenbasis wie auch die Genauigkeit der Ortung verbessert werden.

Der wenigstens eine Tag weist einen vorzugsweise mehrachsigen Lage- und Positionssensor auf. Vorzugsweise handelt es sich um einen 9-Achsen-Sensor. Als 9-Achsen-Sensor ist er typischerweise mit Gyroskop, Beschleunigungssensor und Kompass ausgestattet. Derartige Sensoren sind als standardisierte Sensortypen erhältlich. Sie dienen insbesondere zur Positions- und Lageermittlung.

Vorzugsweise weisen wenigstens einer der Tags und wenigstens einer der Anker jeweils wenigstens einen Luftdrucksensor zur relativen Höhenmessung auf. Damit kann eine relative Höhenmessung auf einfache Weise ermöglicht werden. Alternativ oder ergänzend können auch hierzu Abstandsmessungen durch Multilateration erfolgen, dann entsprechend in vertikaler Richtung.

Insbesondere weist wenigstens eines der UWB-Funkmodule, vorzugsweise zumindest die UWB-Funkmodule der Tags, eine Stromversorgung durch mobile Stromspeicher auf. Hierzu ist insbesondere wenigstens ein Akku vorgesehen. Alternativ oder ergänzend kann auch eine kabelgebundene Stromversorgung vorgesehen sein. Letzteres gilt insbesondere für die Anker, da diese üblicherweise ortsfest installiert sind.

Bevorzugte Ausführungsbeispiele der Erfindung werden im Folgenden anhand der Zeichnungen näher beschrieben. In diesen zeigen:
- Fig. 1: ein erfindungsgemäßes Ortungssystem in einer Übersichtsdarstellung,
- Fig. 2: das Ortungssystem der Fig. 1 mit alternativen Datentarnsportwegen,
- Fig. 3: ein Blockbild eines Ankers,
- Fig. 4: ein Blockbild eines Tags,
- Fig. 5: eine beispielhafte Kartennutzung, und
- Fig. 6: eine Stockwerkzuordnung als Beispiel für Plausibilitätsprüfungen.

Beispielhaft wird im Folgenden ein erfindungsgemäßes Ortungssystem 10 beschrieben, das zur Ortung von Objekten in Umgebungen dient, die nicht hinreichend durch bekannte Ortungssysteme abgedeckt werden können. Beispielsweise handelt es sich um einen Raumbereich 11, der insbesondere innerhalb eines Gebäudes liegen kann.

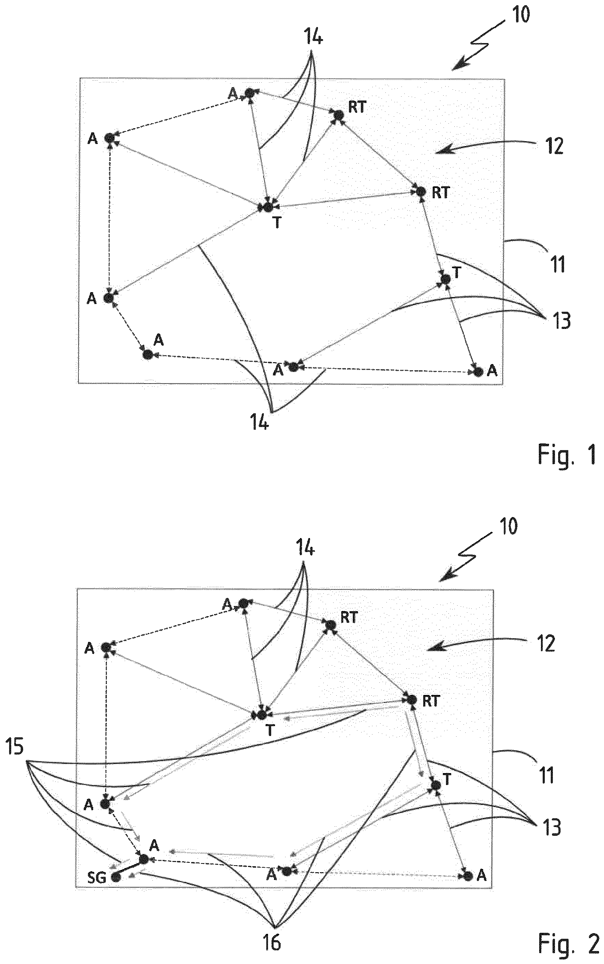

In der Fig. 1 ist dazu ein Netzwerk 12 aus einer Vielzahl von Netzwerkteilnehmern gezeigt. Bei den Netzwerkteilnehmern handelt es sich einerseits um Anker A und andererseits um Tags T und Remote Tags RT. Diese Netzwerkteilnehmer A, T und RT können miteinander kommunizieren, um so eine Ortung im Raumbereich 11 mittels des Netzwerks 12 zu ermöglichen.

Zur Kommunikation der Netzwerkteilnehmer Ankern A mit Tags T oder RT wie auch der Tags T beziehungsweise RT untereinander miteinander sind mit durchgezogenen Pfeilen als UWB-Verbindungen 13 symbolisierte Funkverbindungen im Ultra Wide Band (UWB) dargestellt. Die Kommunikation der Teilnehmer miteinander kann demnach über das UWB-Netzwerk abgewickelt werden.

Für eine direkte Kommunikation zwischen den Anker A sind außerdem Funkverbindungen im Wireless Local Area Network (WLAN) vorgesehen. Dies wird mit den gestrichelten Pfeilen der WLAN-Verbindungen 14 symbolisiert. So können die Anker A direkt über WLAN-Verbindungen 14 eines zusätzlichen WLAN-Netzwerks miteinander Daten austauschen.

Die Kommunikation über WLAN ist außerdem zur Anbindung externer Geräte und Netzwerke vorgesehen. So kann beispielsweise ein Serversystem oder ein Gateway SG angebunden sein, wie es in Fig. 2 gezeigt ist. Als Server oder Serversystem S wird üblicherweise ein Computersystem bezeichnet, das zur Datenverarbeitung oder Datenspeicherung ausgebildet ist. Beispielsweise kann ein Serversystem S zur Steuerung oder auch zur Datenaufnahme des Ortungssystems vorgesehen sein. Als Gateway G werden Schnittstellen in andere Systeme oder auch Netzwerke bezeichnet. Diese dienen dazu, Netzwerktopologien oder Netzwerkprotokolle in geeigneter Weise zwischen den verschiedenen Systemen zu übersetzen. So wird eine systemübergreifende oder auch netzwerkübergreifende Kommunikation ermöglicht.

Alternativ zu einer Verbindung der Anker A beziehungsweise auch der Server oder Gateway SG per Funknetz, insbesondere WLAN, kann gegebenenfalls auch eine Anbindung per Kabelnetzwerk, also zum Beispiel per Local Area Network (LAN), erfolgen. Dies kann insbesondere bei einer festen Installation des Ortungssystems eine Vernetzung per Kabel statt per Funk erfolgen. Beispielsweise kann dann auch eine Stromversorgung der Netzwerkkomponenten über das Netzwerkkabel erfolgen, zum Beispiel per Powerover-Ethernet (PoE).

Bei den Remote Tags RT handelt es sich eigentlich um Tags T. Sie unterscheiden sich von den Tags T im Ortungssystem 10 lediglich dadurch, dass sie außerhalb des Kommunikationsbereichs aller Anker A liegen. So kann eine Kommunikation im Netzwerk 12 mit dem Remote Tags RT lediglich über die UWB-Verbindungen erfolgen. Also werden die Tags T gegebenenfalls zu Remote Tags RT durch Bewegung im Netzwerk und umgekehrt.

Sofern eine direkte Kommunikation zwischen zwei Teilnehmern des Netzwerks 12 nicht möglich ist, kann diese erfindungsgemäß über andere Netzwerkteilnehmer als Zwischenstationen sichergestellt werden. Diese leiten die Daten im UWB-Netzwerk über die UWB-Verbindungen der Netzwerkteilnehmer A, T, RT vom Sender zum Empfänger weiter.

Dabei erfolgt insbesondere eine Optimierung der Kommunikationswege dahingehend, dass versucht wird, jeweils die schnellste Route zu verwenden. Beispielsweise kann im Falle von Überlastungen einzelner Knoten A, T, RT oder UWB-Verbindungen 13 dynamisch eine andere Route durch das Netzwerk 12 gewählt werden. Dies bedeutet, dass das Netzwerk 12 die Routenfindung idealerweise selbsttätig vornimmt. Insbesondere ist dazu ein Routing-Mesh-Algorithmus implementiert.

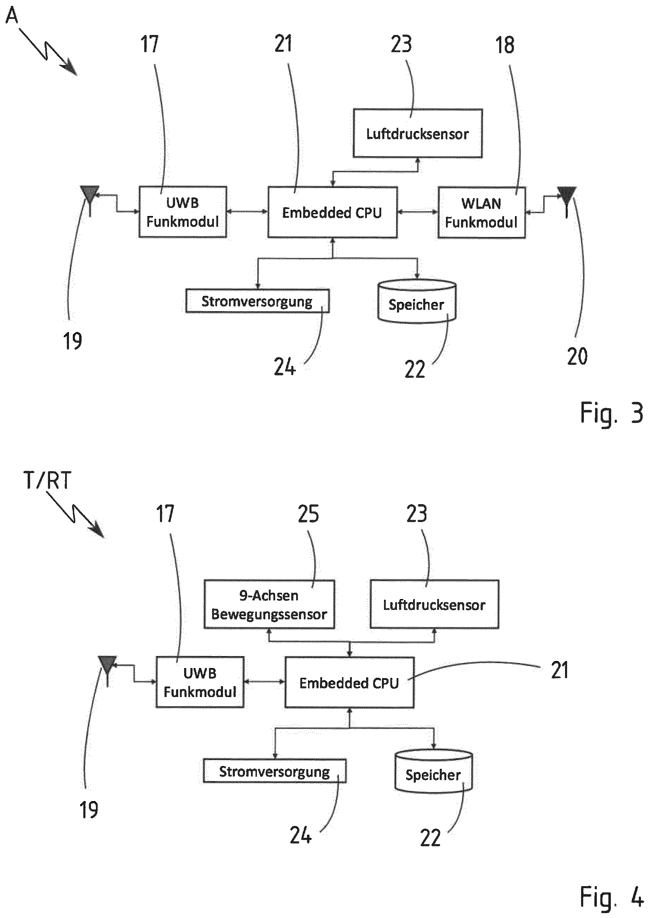

In der Fig. 3 ist beispielhaft ein Anker A als Blockbild dargestellt. Demnach weist dieser ein UWB-Funkmodul 17 wie auch ein WLAN-Funkmodul 18 auf. Entsprechende Antennen für UWB 19 und WLAN 20 sind ebenfalls skizziert. Als Steuerungseinrichtung ist eine Embedded-CPU 21, also eine hochintegrierte Central Processing Unit, vorgesehen. Ein derartiger Prozessor als CPU 21 dient zur Verarbeitung und Weiterleitung der anfallenden Daten und damit letztlich auch zur Berechnung der Ortungsdaten.

Die CPU 21 ist gegebenenfalls mit einem Speicher 22 verbunden, der zur zeitweisen oder auch dauerhaften Speicherung von Daten dient. Zur Aufnahme von Messwerten kann insbesondere wenigstens ein Sensor vorgesehen sein, wie ein Luftdrucksensor 23. Dieser dient zur Messung von Luftdruckunterschieden in unterschiedlichen Höhen und damit zur Höhenermittlung.

Des Weiteren weist der Anker A eine Stromversorgung 23 auf. Dabei kann es sich um eine autonome Stromversorgung handeln, beispielsweise mittels Akku, Brennstoffzelle oder auch Solarzelle. Alternativ oder zusätzlich kann auch eine kabelgebundene Versorgung erfolgen. Beispielsweise kann dazu sowohl eine separate Versorgung mittels Stromnetzanschluss als auch eine Versorgung zum Beispiel per PoE erfolgen.

Die Fig. 4 zeigt entsprechend einen Tag T als Blockbild. Es kann sich natürlich auch um einen Remote Tag RT handeln, als ein Gerät außerhalb der Funkreichweite aller Anker A. Auch hier ist als UWB-Netzwerkteilnehmer ein UWB-Funkmodul 17 mit einer UWB-Antenne 19 vorgesehen. Eine CPU 21 dient zur Steuerung des Tags T. Ein Speicher 22 dient auch hier zur zeitweisen oder dauerhaften Speicherung von Daten.

Da es sich bei den Tags T wie auch bei den Remote Tags RT um bewegliche Netzwerkteilnehmer handelt, ist in aller Regel eine autonome Stromversorgung 23 vorhanden, also insbesondere ein Akku. Damit kann typischerweise eine langandauernde Unabhängigkeit von externen Energiequellen sichergestellt werden. Entsprechende Ladestationen für die Akkus können ebenfalls vorgesehen sein.

Die Tags T wie auch die Remote Tags RT sind üblicherweise den eigentlichen zu ortenden Objekten zugeordnet. Insbesondere handelt es sich bei den Tags T beziehungsweise den Remote Tags RT um Bauteile, die an den Objekten befestigt werden, beispielsweise durch Kleben, Schrauben oder auch Feststecken. Damit kann unmittelbar durch Ortung des jeweiligen Tags T oder Remote Tags RT auf die Position des jeweiligen Objekts geschlossen werden. Bei größeren Objekten können auch zwei oder mehr Tags T beziehungsweise Remote Tags RT verwendet werden, so dass auch die Abmessungen beziehungsweise die Orientierungen des Objekts im Raum ermittelbar sind.

Die tatsächliche Ortung der Tags T und Remote Tags RT im Ortungssystem 10 erfolgt einerseits aufgrund der Ermittlung ihrer relativen Position im Verhältnis zu den wenigstens zwei Ankern A. Andererseits erfolgt sie auch aufgrund der Ermittlung der relativen Position der Tags T beziehungsweise Remote Tags RT im Netzwerk 12 zueinander. Diese Ortung wird im UWB-Funknetz vorgenommen, insbesondere mittels Laufzeitmessungen und Tri- oder Multiangulation entsprechender Funksignale. Aufgrund des verhältnismäßig sehr breiten Frequenzspektrums des UWB-Bandes zwischen 3,1 GHz und 10,6 GHz ist die Ortungsgenauigkeit hoch bei gleichzeitig geringer Störungsanfälligkeit.

Grundsätzlich ist lediglich vorgesehen, Daten grundsätzlich nur zwischen einer Basis, also einem Anker A, und einem Mobilgerät, also einem Tag T, zu übertragen. Dies wird erfindungsgemäß durch Implementierung einer Datenübertragung auch zwischen den Tags T beziehungsweise Remote Tags RT untereinander ermöglicht. Vor allem die von der direkten Kommunikation mit den Ankern A abgeschnittenen Remote Tags RT müssen zwangsläufig auf diese Art der Kommunikation zurückgreifen. Im Stand der Technik könnte eine Ortung derartiger Remote Tags RT daher nicht erfolgen.

Da üblicherweise eine Lokalisation eines Objekts im Raum wenigstens drei Punkte zum Anpeilen erfordert, arbeitet das Ortungssystem 10 mit wenigstens zwei Ankern A und zusätzlichen Daten. Die zusätzlichen Daten können demnach anhand der Positionsdaten weiterer Tags T oder Remote Tags RT wie auch anhand von Plausibilitätsanalysen gewonnen werden. Beispielsweise lassen sich bei einer Vielzahl von Positionsmessungen anhand vieler Tags T der Remote Tags RT sehr genaue Positionsmessungen vornehmen.

Um die Daten für die Lokalisation schnellstmöglich und kostengünstig übertragen zu können, wurde außerdem die erfindungsgemäße Datenübertragung über das UWB-Netzwerk entwickelt. Statt separate Datenverbindungen vorzusehen und zu nutzen, die zusätzliche Kosten hervorrufen, werden sowieso vorhandene Netzwerke genutzt.

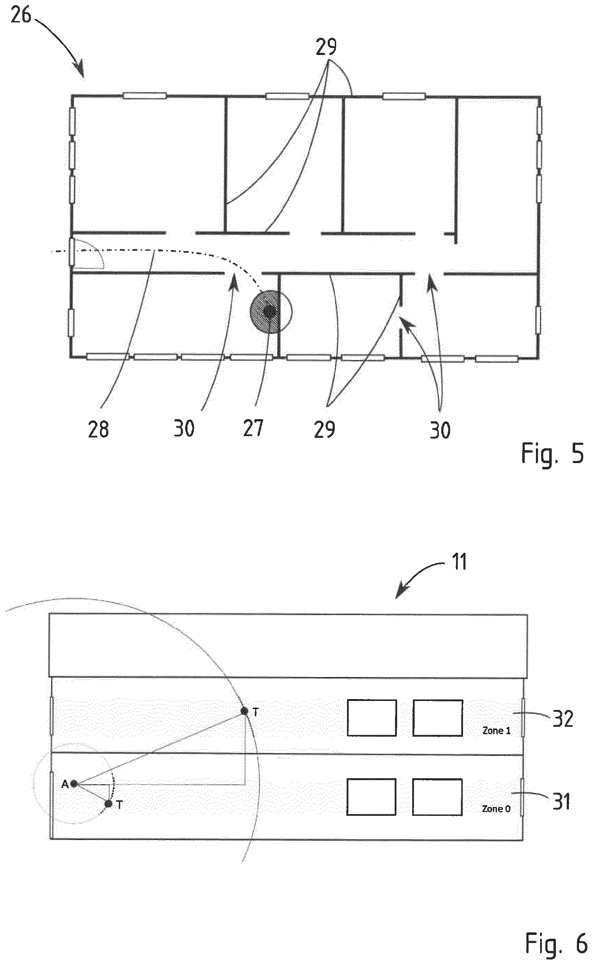

In den Fig. 5 und 6 sind beispielhaft zwei Szenarien gezeigt, in denen sich mittels des erfindungsgemäßen Ortungssystems 10 eine wesentliche genauere Ortung als mit den Systemen aus dem Stand der Technik vornehmen lässt.

Beispielsweise ist in der Kartenansicht der Fig. 5 eine Berücksichtigung von Kartenmaterial bei der Ortung vorgesehen. Die Fig. 5 zeigt hierzu eine Kartendarstellung 26 des hier betrachteten Raumbereichs 11. Anhand von Kartendaten kann dabei eine Plausibilitätsanalyse durchgeführt werden, die die vorangegangenen Positionen und Bewegungsdaten berücksichtigt, um die aktuelle Position 27 ermitteln zu können. Als Bewegungsdaten kommt insbesondere der gerade zurückgelegte Pfad 28 in Betracht.

So kann beispielsweise erkannt werden, dass eine Wand 29 ohne entsprechend vorhandene Öffnung 30 durchtreten werden müsste, um an die aktuell ermittelte Position 27 zu gelangen. So kann einerseits die aktuelle Messung überprüft werden und andererseits eine Warnung an einen Benutzer des Systems 10 herausgegeben werden.

In der Fig. 6 ist eine Ortung in einem Raumbereich 11 mit mehreren Stockwerken gezeigt. Dies kann beispielsweise bei Feuerwehreinsätzen von besonderem Interesse sein. Die Tags T können sich dabei sowohl in einem unteren Stockwerk 31 wie auch in einem oberen Stockwerk 32 bewegen und auch zwischen diesen wechseln. Durch eine entsprechende Peilung im Ortungssystem 10 erfolgt dabei auch hier eine zusätzliche Einbeziehung von Kartendaten oder von Messwerten. So kann beispielsweise durch Luftdruckmessung die Höhe relativ zum Anker A ermittelt werden, um festzustellen, ob sich der Tag T im unteren Stockwerk 31 ("Zone 0") oder im oberen Stockwerk 32 ("Zone 1") befindet. Auch Bewegungsdaten lassen sich gegebenenfalls auswerten, um eine Plausibilitätsanalyse bezüglich der Wahrscheinlichkeit des Aufenthalts eines Tags T beziehungsweise eines Remote Tags RT in einem oder anderen Stockwerk 31, 32 durchzuführen.

**Bezugszeichenliste:**

| | | | |
|---|---|---|---|
| 10 | Ortungssystem | A | Anker |
| 11 | Raumbereich | T | Tag |
| 12 | Netzwerk | RT | Remote Tag |
| 13 | UWB-Verbindung (durchgezogene Linie) | SG | Server/Gateway |
| 14 | WLAN-Verbindung (gestrichelte Linie) | | |
| 15 | UWB-Route 1 | | |
| 16 | UWB-Route 2 | | |
| 17 | UWB-Funkmodul | | |
| 18 | WLAN-Funkmodul | | |
| 19 | UWB-Antenne | | |
| 20 | WLAN-Antenne | | |
| 21 | CPU | | |
| 22 | Speicher | | |
| 23 | Luftdrucksensor | | |
| 24 | Stromversorgung | | |
| 25 | 9-Achsen-Sensor | | |
| 26 | Kartendarstellung | | |
| 27 | Positionen | | |
| 28 | Pfad | | |
| 29 | Wand | | |
| 30 | Öffnung | | |
| 31 | unteres Stockwerk | | |
| 32 | oberes Stockwerk | | |

## Patentansprüche

1. Verfahren zur Ortung eines insbesondere beweglichen Tags (T, RT), insbesondere eines Objekts mit einem damit verbundenen Tag (T, RT), vorzugsweise eines Fahrzeugs oder Fluggeräts, und/oder einer Person mit einem damit verbundenen Tag (T, RT), innerhalb eines dreidimensionalen Raumbereichs (11), wobei der Tag (T, RT) wenigstens ein Funkmodul im Ultra-Wide-Band, wie ein UWB-Funkmodul (17), aufweist, und wobei außerdem wenigstens zwei weitere UWB-Funkmodule (17) als Anker zur Definition fester Positionen im Raum positioniert werden, **dadurch gekennzeichnet, dass** eine Ortung des wenigstens einen Tags (T, RT), insbesondere des Objekts und/oder der Person, mittels eines UWB-Netzwerks aus UWB-Funkmodulen (17) ermöglicht wird, wobei Datenpakete zur Positionsermittlung des Tags (T, RT) beziehungsweise des Objekts und/oder der Person innerhalb des UWB-Netzwerks zwischen den UWB-Funkmodulen (17) weitergeleitet werden.

2. Verfahren nach Anspruch 1, **dadurch gekennzeichnet, dass** zwei Anker (A) und wenigstens ein Tag (T, RT), vorzugsweise mehrere Tags (R, RT) verwendet werden.

3. Verfahren nach Anspruch 1 oder 2, **dadurch gekennzeichnet, dass** die Datenübertragung ausschließlich über das UWB-Netzwerk (17) vorgenommen wird, wobei vorzugsweise die Daten zwischen den UWB-Funkmodulen (17) vom Sender zum Empfänger weitergeleitet werden, gegebenenfalls über ein UWB-Funkmodul (17) oder mehrere UWB-Funkmodule (17) als Zwischenstation.

4. Verfahren nach einem der vorhergehenden Ansprüche, **dadurch gekennzeichnet, dass** ein Routing Mesh Algorithmus zum Datenaustausch und zur Datenweiterleitung zwischen den UWB-Funkmodulen (17) im UWB-Netzwerk implementiert ist, wobei vorzugsweise die Pfade zum Datenaustausch und zur Datenweiterleitung innerhalb des UWB-Netzwerks kontinuierlich optimiert werden.

5. Verfahren nach einem der vorhergehenden Ansprüche, **dadurch gekennzeichnet, dass** die Lage und/oder Bewegung des wenigstens einen Tags (T, RT) im Raumbereich durch Messung mittels eines Lage- und Positionssensors ermittelt wird, vorzugsweise mittels wenigstens eines 9-Achsen-Sensors (25) mit Gyroskop, Beschleunigungssensor und Kompass.

6. Verfahren nach einem der vorhergehenden Ansprüche, **dadurch gekennzeichnet, dass** die relative Höhe des wenigstens einen Tags (T, RT) durch Messung von Luftdruckunterschieden zwischen Tag (T, RT) und Anker (A) ermittelt wird.

7. Verfahren nach einem der vorhergehenden Ansprüche, **dadurch gekennzeichnet, dass** die Position (27) eines Tags (T, RT) im Raumbereich innerhalb und/oder außerhalb der Reichweite von Ankern (A) oder auch von Remote Tags (RT) anhand der Kommunikation mit anderen Tags (T) ermittelt wird, wobei vorzugsweise Abstandsmessungen und/oder Empfangsqualitätsmessungen und/oder Laufzeitmessungen und/oder Luftdruckmessungen vorgenommen werden.

8. Verfahren nach einem der vorhergehenden Ansprüche, **dadurch gekennzeichnet, dass** gespeicherte Daten in Form von Kartenmaterial und/oder Plänen von Gebäuden und/oder Anlagen und/oder vorangegangenen Bewegungsmustern zur Verbesserung der Positionsermittlung im Raumbereich (11) verwendet werden, wobei vorzugsweise Plausibilitätsprüfungen zulässiger Wegprofile anhand der gespeicherten Daten durchgeführt werden und/oder wobei Zuordnungen zu Positionen (27) im Raumbereich (11) anhand von Kartendaten vorgenommen werden und/oder wobei vorzugsweise bei der Bewegung weitere Daten ermittelt und gespeichert werden.

9. Verfahren nach einem der vorhergehenden Ansprüche, **dadurch gekennzeichnet, dass** die ermittelte Position (27) eines Tags (T, RT) im UWB-Netzwerk für andere Netzwerkteilnehmer abfragbar bereitgehalten wird, wobei die Daten vorzugsweise nur innerhalb des UWB-Netzwerks übertragen und/oder weitergeleitet werden.

10. Ortungssystem zur Ermittlung der Position (27) wenigstens eines beweglichen Objekts und/oder einer Person innerhalb eines Raumbereichs, insbesondere wenigstens eines Fahrzeugs oder Fluggeräts, wobei das Objekt und/oder die Person wenigstens ein Tag (T, RT) aufweist, wobei der Tag (T, RT) wenigstens ein Funkmodul im Ultra-Wide-Band (UWB-Funkmodul) (17) aufweist und wobei außerdem wenigstens zwei weitere UWB-Funkmodule (17) als Anker (A) zur Definition fester Positionen im Raumbereich (11) positioniert sind, wobei vorzugsweise ein Verfahren zur Positionsermittlung nach einem der vorhergehenden Ansprüche implementiert ist, **dadurch gekennzeichnet, dass** die UWB-Funkmodule (17) zur Übertragung und/oder Weiterleitung der Daten zur Positionsermittlung im UWB-Netzwerk ausgebildet sind.

11. Ortungssystem nach Anspruch 10, **dadurch gekennzeichnet, dass** zwei Anker (A) und wenigstens ein Tag (T, RT), vorzugsweise mehrere Tags (T, RT) vorgesehen sind.

12. Ortungssystem nach Anspruch 10 oder 11, **dadurch gekennzeichnet, dass** ein Speicher (22) zum Speichern und/oder Bereitstellen von Daten, insbesondere von Kartenmaterial und/oder vorangegangenen Bewegungsmusters, betreffend den Raumbereich (11) vorgesehen ist, wobei die Daten vorzugsweise eine Verbesserung der Positionsbestimmung ermöglichen, weiter vorzugsweise durch Fortsetzen der Datenspeicherung bei der Bewegung im Raumbereich (11).

13. Ortungssystem nach Anspruch 10 oder 12, **dadurch gekennzeichnet, dass** der wenigstens eine Tag (T) einen vorzugsweise mehrachsigen Lage- und Positionssensor aufweist, weiter vorzugsweise einen 9-Achsen-Sensor (25) mit Gyroskop, Beschleunigungssensor und Kompass.

14. Ortungssystem nach einem der Ansprüche 10 bis 13, **dadurch gekennzeichnet, dass** der Tag (T, RT) und wenigstens einer der Anker (A) jeweils wenigstens einen Luftdrucksensor (23) zur relativen Höhenmessung aufweisen.

15. Ortungssystem nach einem der Ansprüche 10 bis 14, **dadurch gekennzeichnet, dass** wenigstens eines der UWB-Funkmodule (17), vorzugsweise zumindest die UWB-Funkmodule (17) der Tags (T), eine Stromversorgung (24) durch mobile Stromspeicher aufweisen, wie insbesondere wenigstens einen Akku, wobei alternativ eine kabelgebundene Stromversorgung vorgesehen sein kann.
